# EUROPÄISCHE PATENTSCHRIFT

(11) **EP 1 149 741 B1**
(45) Veröffentlichungstag und Bekanntmachung des Hinweises auf die Patenterteilung: **13.06.2007**
(21) Anmeldenummer: 01108761.6
(22) Anmeldetag: 06.04.2001
(51) Int. Cl.: B60R 21/16, B60R 21/20

(54) **Faltverfahren und -vorrichtung**
Folding method and device
Procédé et dispositif de pliage

(30) Priorität: 27.04.2000 DE 10020677
(43) Veröffentlichungstag der Anmeldung: 31.10.2001
(73) Patentinhaber: Delphi Technologies, Inc., Troy, MI 48007 (US)
(72) Erfinder: Kleeberger, Peter, 81543 München (DE); Strasser, Christian L., 40597 Düsseldorf (DE)
(74) Vertreter: Manitz, Finsterwald & Partner GbR

(56) Entgegenhaltungen:
- EP-A- 0 888 226
- WO-A-00/68040
- DE-A1- 19 856 623
- DE-U1- 9 101 099
- GB-A- 2 309 942

## Beschreibung

Die Erfindung betrifft ein Verfahren sowie eine Vorrichtung zum Zusammenfalten einer aufblasbaren Luftsackhülle eines Luftsackmoduls für Kraftfahrzeuge.

Luftsackmodule für Fahrzeugairbags werden in großen Stückzahlen hergestellt. Man ist daher bestrebt, die Herstellung der Luftsackmodule, die das Zusammenfalten der Luftsackhülle beinhaltet, zu vereinfachen und zu beschleunigen. Aus WO 97/34782 A1 und G9101099U1 sind schrumpfbarre umhüllungen fur Airbags bekannt.

Es ist das der Erfindung zugrundeliegende Problem (Aufgabe), eine Möglichkeit zu schaffen, Luftsackmodule für Kraftfahrzeuge möglichst schnell und einfach herzustellen, wobei diese Möglichkeit insbesondere auch für Seitenairbaganordnungen gegeben sein soll, bei denen sich der Luftsack im Fahrzeug bei einem Unfall nach Art eines Vorhangs entlang einer Fahrzeugseitenwand nach unten entfaltet.

Die Lösung dieser Aufgabe erfolgt durch die Merkmale des Verfahrensanspruchs 1.

Erfindungsgemäß wird die Luftsackhülle mittels der Falttasche zusammengefaltet oder zusammengerafft, indem das Faltvolumen, also derjenige Bereich der Falttasche, in dem die Luftsackhülle angeordnet ist, verkleinert wird. Ein wesentlicher Vorteil der Erfindung besteht darin, daß am Ende des Faltvorgangs die zusammengefaltete Luftsackhülle nach wie vor innerhalb der Falttasche angeordnet ist. Die Faltung des Luftsacks kann somit durch die die zusammengefaltete Luftsackhülle umgebende Falttasche gesichert werden.

Gleichzeitig dient die Falttasche als eine die zusamengefaltete Luftsackhülle schützende Abdeckung. Zur Sicherung der Faltung und zum Schutz der gefalteten Luftsackhülle sind somit keine weiteren Maßnahmen erforderlich. Die Falttasche mit der darin angeordneten, zusammengefalteten Luftsackhülle kann als Luftsackmodul oder als Bestandteil des Luftsackmoduls in einem Fahrzeug montiert werden.

Durch das erfindungsgemäße Faltverfahren wird folglich das Zusammenfalten der Luftsackhülle und somit die Herstellung von Luftsackmodulen erheblich vereinfacht und beschleunigt.

Ein weiterer Vorteil des erfindungsgemäßen Faltens der Luftsackhülle in einer Falttasche besteht darin, daß die Gefahr von Beschädigungen der Luftsackhülle minimal ist, da die Luftsackhülle ausschließlich mit der Falttasche in Berührung kommt und ein unmittelbarer Kontakt mit anderen Gegenständen vermieden wird.

Von Vorteil ist außerdem, daß das Faltvolumen der Falttasche auf eine grundsätzlich beliebig geringe Größe gebracht werden kann. Durch Verkleinern des Faltvolumens kann daher eine minimale Packungsgröße der zusammengefalteten oder zusammengerafften Luftsackhülle erzielt werden.

Grundsätzlich kann das erfindungsgemäße Faltverfahren zur Herstellung beliebiger Packungsformen der zusammengefalteten Luftsackhülle eingesetzt werden. Gemäß einem besonders bevorzugten Ausführungsbeispiel der Erfindung wird die Luftsackhülle zu einer langgestreckten Packungsform zusammengefaltet.

Hierdurch kann das erfindungsgemäße Faltverfahren bei der Herstellung von Seitenairbaganordnungen eingesetzt werden, deren Luftsack sich bei einem Unfall nach Art eines Vorhangs entfaltet.

Die Seitenairbaganordnungen können wenigstens ein mit Gasaustrittsöffnungen versehenes und sich zumindest bereichsweise durch die Luftsackhülle erstreckendes Gasrohr umfassen. Durch Fixieren des Gasrohres kann die Luftsackhülle bereichsweise fixiert werden, so daß durch Bewegen der Falttasche relativ zum fixierten Gasrohr die Luftsackhülle gegen das Gasrohr gedrückt werden kann. Das Gasrohr dient somit als Träger-oder Halteorgan für die Luftsackhülle.

Diese Faltmöglichkeit ist grundsätzlich auch bei anderen an Luftsackmodulen vorgesehenen Träger- oder Halteorganen gegeben, die durch geeignete Mittel fixiert werden und gegen die die Luftsackhülle mittels der Falttasche durch Verkleinern des Faltvolumens gedrückt wird.

Gemäß einem weiteren bevorzugten Ausführungsbeispiel der Erfindung wird zur Bildung der Falttasche wenigstens eine Materiallage um die Luftsackhülle herumgelegt.

Auf besonders einfache Weise kann hierbei die Falttasche von einer einzigen Materiallage gebildet werden, die z.B. zunächst ausgebreitet und auf die die zumindest teilweise ausgebreitete Luftsackhülle anschließend aufgelegt wird. Durch Umschlagen des nicht von der Luftsackhülle bedeckten Bereiches der Materiallage entsteht dann die Falttasche, zwischen deren Seitenwänden die Luftsackhülle flächig angeordnet ist.

Prinzipiell kann erfindungsgemäß auch eine hängende Falttasche mit im wesentlichen vertikalen Seitenwänden vorgesehen sein, zwischen die die Luftsackhülle gehängt wird. Durch Hochziehen wenigstens einer Seitenwand der Falttasche wird dann die Luftsackhülle in Richtung eines fixierten Bereiches der Luftsackhülle bewegt und z.B. gegen ein die Luftsackhülle fixierendes Gasrohr gedrückt.

Gemäß einer weiteren bevorzugten Ausführungsform der Erfindung wird das Faltvolumen zumindest im wesentlichen ohne Faltung der Falttasche verkleinert.

Hierdurch ist sichergestellt, daß die Luftsackhülle sowohl während des Zusammenfaltens als auch im endgültig zusammengefalteten Zustand stets von einer im wesentlichen faltenfreien Hülle umgeben ist. Ein Ineinandergreifen von Falttasche und Luftsackhülle wird somit sicher vermieden.

Dabei ist es bevorzugt, wenn die Volumenverkleinerung durch Bewegen der Falttasche, insbesondere durch Ziehen an der Falttasche, in einer etwa parallel zur Ebene der Ausbreitung der Luftsackhülle verlaufenden Richtung erfolgt. Vorzugsweise wird hierzu eine Seitenwand der Falttasche fixiert und das Faltvolumen durch Ziehen an einer anderen, insbesondere der gegenüberliegenden, Seitenwand der Falttasche verkleinert.

Gemäß einem weiteren bevorzugten Ausführungsbeispiel der Erfindung erfolgt die Verkleinerung des Faltvolumens innerhalb eines Faltraumes, durch den die Packungsgröße der Luftsackhülle beim Zusammenfalten in von einer Faltrichtung abweichenden Richtungen, insbesondere etwa senkrecht zur Faltrichtung, begrenzt wird.

Durch Zusammenfalten der Luftsackhülle innerhalb eines derartigen Faltraumes ist automatisch sichergestellt, daß eine maximale, durch die Wahl der Abmessungen des Faltraumes einstellbare Größe des von der zusammengefalteten Luftsackhülle gebildeten Pakets nicht überschritten wird. Das erfindungsgemäße Faltungsprinzip, bei dem die Luftsackhülle mittels der Falttasche zusammengefaltet oder zusammengerafft wird, ist von der Größe des Faltraumes grundsätzlich unabhängig und benötigt insbesondere - abgesehen von der Materialstärke der Luftsackhülle und der Falttasche - keine Mindestabmessungen des Faltraumes, so daß durch Verstellen der Faltraumabmessungen Luftsackhüllenpakete von grundsätzlich beliebiger Größe hergestellt werden können.

Des weiteren ist es bevorzugt, wenn die Verkleinerung des Faltvolumens zwischen zwei zumindest im wesentlichen parallel verlaufenden, insbesondere an plattenförmigen Begrenzungsorganen ausgebildeten Begrenzungsflächen erfolgt.

Der Faltraum kann z.B. von zwei parallel verlaufenden Platten gebildet werden, so daß die Luftsackhülle zwischen den beiden Platten zusammengefaltet wird. Die Verkleinerung des Faltvolumens der Falttasche und somit die Faltung der Luftsackhülle erfolgt in einer Faltrichtung, die in einer etwa parallel zu den Platten verlaufenden Ebene liegt. Senkrecht zu dieser Faltrichtung werden die Abmessungen des beim Zusammenfalten entstehenden Luftsackhüllenpakets durch die Platten auf den Plattenabstand begrenzt.

Gemäß einer weiteren bevorzugten Ausführungsform der Erfindung wird nach dem Zusammenfalten der Luftsackhülle auf die endgültige Pakkungsgröße die Falttasche verschlossen, insbesondere durch Verbinden, bevorzugt Verschweißen und/oder Vernähen, von gegenüberliegenden Seitenwänden der Falttasche.

Hierdurch bildet die Falttasche eine die zusammengefaltete Luftsackhülle umgebende Schutzummantelung, die zum einen die hergestellte Faltpakkung sichert, indem sie eine Entfaltung oder Entspannung der Luftsackhülle verhindert, und die zum anderen die Luftsackhülle vor äußeren Einflüssen schützt. Zusätzliche Maßnahmen zur Sicherung der Faltung bzw. zum Schutz der Luftsackhülle sind daher entbehrlich.

Die Lösung der der Erfindung zugrundeliegenden Aufgabe erfolgt außerdem durch die Merkmale des Vorrichtungsanspruchs 12.

Vorzugsweise ist die Falttasche aus einem Textil- und/oder Gewebematerial, beispielsweise aus Nylon, hergestellt.

Hierdurch können der Falttasche optimale Flexibilitäts- und Stabilitätseigenschaften verliehen werden.

Gemäß einer weiteren bevorzugten Ausführungsform der Erfindung ist die Falttasche mit wenigstens einem bevorzugt linien- oder streifenförmigen Aufreißbereich versehen.

Die Falttasche kann dadurch als Abdeckung oder Ummantelung für die zusammengefaltete Luftsackhülle im montierten Zustand in einem Fahrzeug dienen, die beim Aufblasen des Luftsacks an dem dafür vorgesehenen Aufreißbereich aufreißt, um die Entfaltung der Luftsackhülle zu ermöglichen.

Gemäß einem weiteren bevorzugten Ausführungsbeispiel der Erfindung ist eine Fixiereinrichtung für die Luftsackhülle vorgesehen, die bevorzugt außerhalb eines Faltraumes für die Falttasche angeordnet ist.

Die Fixierung der Luftsackhülle ermöglicht es, die Falttasche relativ zu dem fixierten Bereich der Luftsackhülle zu bewegen und die Luftsackhülle mittels der Falttasche in Richtung des fixierten Bereiches der Luftsackhülle zusammenzufalten bzw. zusammenzuraffen.

Dabei ist es bevorzugt, wenn die Fixiereinrichtung zur Fixierung eines Trägerorgans des Luftsackmoduls ausgebildet ist, mit dem die Luftsackhülle verbunden ist.

Hierbei kann die Luftsackhülle zwischen der Falttasche und dem Trägerorgan zusammengedrückt werden, indem die Luftsackhülle beispielsweise durch Ziehen an der Falttasche gegen das Trägerorgan gezogen bzw. gerafft wird.

Bei dem Trägerorgan kann es sich um das Gasrohr eines Luftsackmoduls für eine Seitenairbaganordnung handeln, das zumindest bereichsweise innerhalb der Luftsackhülle verläuft.

Das zum Aufblasen des Luftsacks dienende und bevorzugt mit einer Vielzahl von Gasaustrittsöffnungen versehene Gasrohr dient hier gleichzeitig als Anschlag für die mittels der Falttasche zusammengedrückte bzw. zusammengeraffte Luftsackhülle.

Die erfindungsgemäße Faltvorrichtung kann derart ausgelegt sein, daß am Ende des Faltvorgangs das Gasrohr zusammen mit der zusammengefalteten Luftsackhülle innerhalb der Falttasche angeordnet ist. Am Ende des Faltvorgangs liegt somit eine montagefertige Baugruppe vor, die als Luftsackmodul oder als Bestandteil des Luftsackmoduls in einem Fahrzeug montiert werden kann.

Gemäß einem weiteren bevorzugten Ausführungsbeispiel der Erfindung ist die Faltvorrichtung in mehrere Abschnitte unterteilt, die bevorzugt relativ zueinander verstellbar sind. Die Unterteilung in mehrere Abschnitte ermöglicht es, gezielt eine bestimmte Packungsform der zusammengefalteten Luftsackhülle zu realisieren, die durch die Art und Weise der Anordnung der Abschnitte vorgegeben wird. Durch die bevorzugte Verstellbarkeit der Abschnitte können mit einer Faltvorrichtung unterschiedliche Packungsformen der zusammengefalteten Luftsackhülle erzielt werden.

Insbesondere zur Bildung unterschiedlich gekrümmter langgestreckter Packungsformen kann die zur Fixierung der Luftsackhülle bzw. eines Gasrohres der Luftsackhülle vorgesehene Fixier- bzw. Klemmeinrichtung verstellbar ausgeführt sein.

Ein die zusammengefaltete Luftsackhülle umfassendes Luftsackmodul, das Bestandteil einer Seitenairbaganordnung ist, kann hierdurch gezielt an den jeweiligen Verwendungszweck oder Fahrzeugtyp angepaßt werden.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1a - 1c: jeweils in einer geschnittenen Seitenansicht unterschiedliche Phasen einer gemäß der Erfindung durchgeführten Faltung einer Luftsackhülle,
- Fig. 1d: einen Schnitt entlang der Linie A-A von Fig. 1c,
- Fig. 2: eine Draufsicht auf einen Teil der Faltvorrichtung, und
- Fig. 3: eine Draufsicht auf die gesamte, in mehrere Abschnitte unterteilte Faltvorrichtung.

Die Erfindung wird im folgenden am Beispiel eines Luftsacks für eine Seitenairbaganordnung beschrieben, der eine Luftsackhülle 12 und ein zylindrisches Gasrohr 18 umfaßt, das sich durch die Luftsackhülle 12 hindurch erstreckt und mit mehreren Gasaustrittsöffnungen 18a versehen ist.

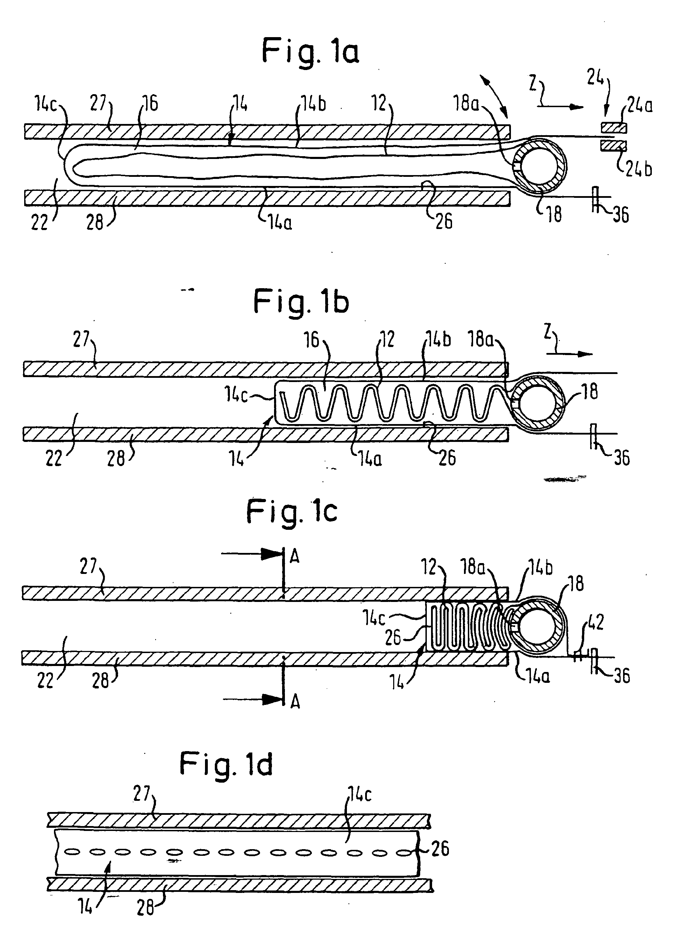

Die Faltvorrichtung umfaßt zwei Platten 27, 28, die sich in der Betriebsstellung gemäß Fig. 1a - 1d parallel zueinander in horizontaler Richtung erstrecken. Die Platten 27, 28 begrenzen einen Faltraum 22 von im Vergleich zur Ausdehnung der Platten 27, 28 geringer Höhe. Der Faltraum 22 kann durch Verschwenken der oberen Platte 27 in der durch den Pfeil in Fig. 1a angedeuteten Weise geöffnet und geschlossen werden. Des weiteren sind die Platten 27, 28 derart relativ zueinander bewegbar, daß der Plattenabstand, d.h. die Höhe des Faltraumes 22, stufenlos verstellt werden kann.

Des weiteren umfaßt die Faltvorrichtung eine Materiallage 14, die aus einem beispielsweise aus Nylon hergestellten Gewebematerial besteht. Zu Beginn des Faltvorgangs wird die Materiallage 14 bei hochgeschwenkter oberer Platte 27 auf der unteren Platte 28 ausgebreitet und an einem Randbereich auf Haltestifte 36 gesteckt, die längs des Gasrohres 18 verteilt angeordnet sind.

Auf die mittels der Haltestifte 36 fixierte Materiallage 14 wird anschlie-ßend die ausgebreitete Luftsackhülle 12 mit eingestecktem Gasrohr 18 gelegt. Daraufhin wird der nicht von der Luftsackhülle 12 bedeckte Bereich der Materiallage 14 umgeschlagen und auf die Luftsackhülle 12 gelegt.

Die Luftsackhülle 12 ist dadurch in einer von der Materiallage 14 gebildeten Falttasche angeordnet und befindet sich innerhalb eines Faltvolumens 16 der Falttasche 14, das auf der einen Seite vom Gasrohr 18, auf der gegenüberliegenden Seite vom Boden 14c der Falttasche 14 sowie von den einander gegenüberliegenden Seitenwänden 14a, 14b der Falttasche 14 begrenzt ist.

Anschließend wird der Faltraum 22 durch Herunterschwenken der oberen Platte 27 geschlossen.

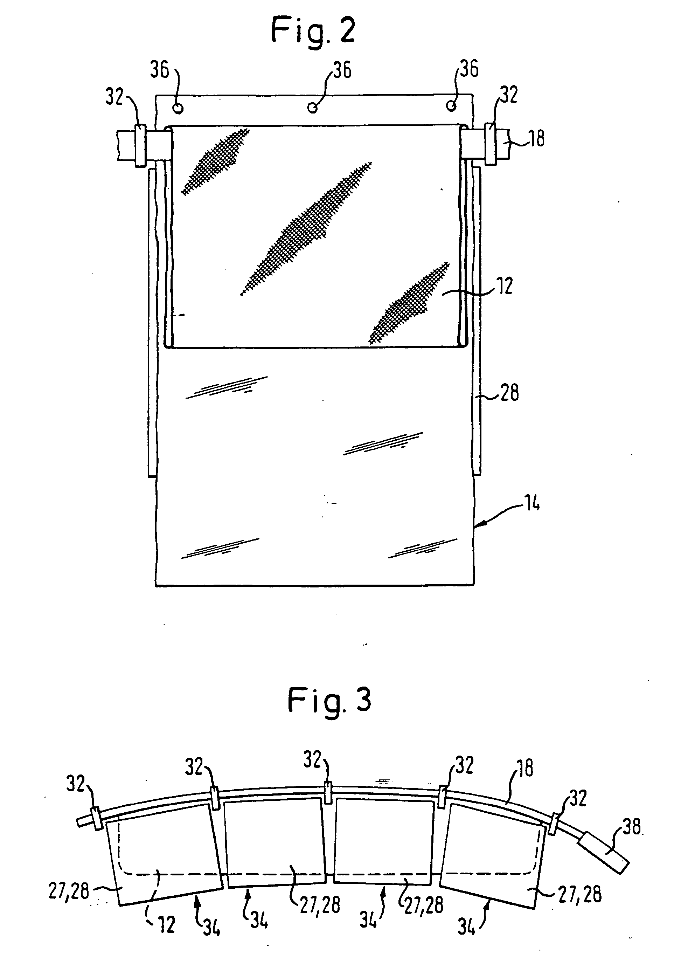

Vor dem Zusammenfalten der Luftsackhülle 12 wird das im Bereich einer Längsseite der Plattenanordnung 27, 28 außerhalb des Faltraumes 22 angeordnete Gasrohr 18 mittels in Fig. 1a - 1d nicht dargestellter Klemmeinrichtungen fixiert. Auf die Klemmeinrichtungen wird nachstehend in Verbindung mit den Fig. 2 und 3 näher eingegangen.

Die obere Seitenwand 14b der Falttasche 14 wird außerhalb des Faltraumes 22 mit einer lediglich schematisch dargestellten Betätigungseinrichtung 24 verbunden. Hierzu wird die Seitenwand 14b zwischen zwei Klemmbacken 24a, 24b der Betätigungseinrichtung 24 eingeklemmt. Die Mittel zur Koppelung der Falttasche 14 bzw. der oberen Seitenwand 14b der Falttasche 14 an die Betätigungseinrichtung 24 können grundsätzlich beliebig ausgeführt sein.

Die Betätigungsvorrichtung 24 ist in einer parallel zu den Platten 27, 28 und somit parallel zur Ebene der Ausbreitung der Luftsackhülle 12 verlaufenden Ebene etwa senkrecht zur Längserstreckung des Gasrohres 18 in einer Ziehrichtung Z bewegbar. Der eigentliche Faltvorgang beginnt durch Bewegen der Zieh- bzw. Betätigungseinrichtung 24, wodurch die obere Seitenwand 14b der Falttasche 14 aus dem Faltraum 22 herausgezogen und somit das die Luftsackhülle 12 enthaltende Faltvolumen 16 der Falttasche 14 verkleinert wird.

Wie insbesondere aus der einen Zwischenzustand des Faltvorgangs darstellenden Fig. 1b hervorgeht, erfolgt die Verkleinerung des Faltvolumens 16 ohne Faltung der Falttasche 14. Die im Faltraum 22 zwischen den beiden Platten 27, 28 befindlichen Bereiche der Seitenwände 14a, 14b der Falttasche 14 verlaufen während des Faltvorgangs parallel zu den Platten 27,28.

Aufgrund der Verkleinerung des Faltvolumens 16 durch Ziehen an der oberen Seitenwand 14b der Falttasche 14 wird die Luftsackhülle 12 zwischen dem Boden 14c der Falttasche 14 und dem Gasrohr 18 zusammengedrückt. Dieser Vorgang kann auch als Zusammenraffen, -drücken, -quetschen, -knüllen oder -knautschen bezeichnet werden.

Die sich dabei einstellende Faltung der Luftsackhülle 12 ist in den Fig. 1b und 1c als im wesentlichen regelmäßige, ziehharmonikaartige Faltung dargestellt. Grundsätzlich unterliegt die Art und Weise der Faltung dem Zufall, und es kann sich bei diesem Faltverfahren auch eine vollkommen unregelmäßige oder eine sowohl regelmäßige als auch unregelmäßige Anteile aufweisende Faltung der Luftsackhülle 12 einstellen.

Die Ausdehnung des während des Faltens entstehenden Luftsackhüllenpaketes senkrecht zur Zieh- bzw. Faltrichtung Z ist durch die Höhe des Faltraumes 22 und somit durch den Abstand der beiden Platten 27, 28 begrenzt. In diesem Ausführungsbeispiel ist der Plattenabstand etwa gleich dem Außendurchmesser des Gasrohres 18.

Fig. 1c zeigt den endgültig zusammengefalteten Zustand, in dem die Luftsackhülle 12 auf die gewünschte End-Packungsgröße zusammengefaltet oder zusammengezogen ist. Wenn dieser Zustand erreicht ist, werden die beiden Seitenwände 14a, 14b der Falttasche 14 auf der vom Luftsackhüllenpaket abgewandten Seite des Gasrohres 18 zwischen dem Gasrohr 18 und den Haltestiften 36 miteinander verbunden. Diese Verbindung kann beispielsweise durch Ultraschallschweißen oder Vernähen realisiert werden.

Durch dieses Verschließen der Falttasche 14 wird die Luftsackhülle 12 in ihrem endgültig zusammengefalteten Zustand fixiert, so daß sie sich nicht von selbst entspannen und auseinanderfalten kann. Außerdem ist die zusammengefaltete Luftsackhülle 12 am Ende des Faltvorgangs montagefertig in einer von der Falttasche 14 gebildeten Abdeckung oder Ummantelung angeordnet.

Nach dem Öffnen des Faltraumes 22 durch Hochschwenken der oberen Platte 27 kann die Baugruppe aus Gasrohr 18, zusammengefalteter Luftsackhülle 12 und Falttasche 14 von der Faltvorrichtung abgenommen werden.

Erfindungsgemäß wird in diesem Ausführungsbeispiel die Materiallage 14 somit bei der Vorbereitung des Faltvorgangs zu einer Falttasche 14 und durch den Faltvorgang zu einem eine Abdeckung oder Ummantelung der Luftsackhülle 12 bildenden Bestandteil des Luftsackmoduls.

Ein wesentlicher Vorteil der Erfindung besteht darin, daß auf die vorstehend beschriebene Art und Weise der Faltung eine maximale Packungsdichte der zusammengefalteten Luftsackhülle 12 und somit eine minimale Packungsgröße erzielbar ist. Je strammer die Falttasche 14 mittels der Betätigungseinrichtung 24 zusammengezogen wird, desto höher ist die endgültige Packungsdichte.

Durch die Länge der von der Betätigungseinrichtung 24 in Ziehrichtung Z zurückgelegten Ziehstrecke ist folglich die Packungsgröße in dieser Ziehrichtung Z einstellbar, während die Abmessungen der Luftsackhüllenpackung senkrecht zur Ziehrichtung Z durch den Abstand der Platten 27, 28 vorgegeben werden kann.

Insbesondere Fig. 1d zeigt, daß in dem Bereich der Materiallage 14, der bei endgültig zusammengefalteter Luftsackhülle 12 den Boden 14c der Falttasche 14 bildet, ein linienförmiger, parallel zum Gasrohr 18 verlaufender Aufreißbereich 26 vorgesehen ist, der als Aufreißnaht ausgebildet ist.

Die Aufreißnaht 26 ist derart ausgelegt, daß sie bei einem Unfall durch Aufblasen der Luftsackhülle 12 mittels des Gasrohres 18 aufreißt, um eine freie Entfaltung der Luftsackhülle 12 zu ermöglichen.

Fig. 2 zeigt eine Draufsicht auf einen Teil der erfindungsgemäßen Faltvorrichtung ohne die obere Platte 27 vor der Bildung der Falttasche. Die später die Falttasche bildende Materiallage 14 ist auf der unteren Platte 28 ausgebreitet, während die Luftsackhülle 12, durch die sich das Gasrohr 18 hindurch erstreckt, im ausgebreiteten Zustand auf der Materiallage 14 aufliegt. Seitlich der Platte 28 sind Klemmeinrichtungen 32 zur Fixierung des Gasrohres 18 angeordnet. Ferner sind die Haltestifte 36 dargestellt, die zur Fixierung der Materiallage 14 dienen.

Die Fixiermittel 32 und 36 für das Gasrohr 18 bzw. die Falttasche 14 können grundsätzlich beliebig ausgeführt sein.

In Fig. 2 ist vom Gasrohr 18, von der Luftsackhülle 12 und von der später die Falttasche bildenden Materiallage 14 jeweils nur ein Teilabschnitt dargestellt. Wie Fig. 3 zeigt, ist die erfindungsgemäße Faltvorrichtung in mehrere Abschnitte 34 unterteilt, die in dem dargestellten Ausführungsbeispiel vier Plattenanordnungen 27, 28 umfassen. Die Plattenanordnungen 27, 28 sind entsprechend der Krümmung des Gasrohres 18 nebeneinander angeordnet. Das Gasrohr 18 ist mit einem Ende an einen auch als Inflator bezeichneten Gasgenerator 38 angeschlossen.

Die in Fig. 3 nicht dargestellte Materiallage 14 kann sich über die volle Länge der Luftsackhülle 12 erstrecken oder mehrere längs des Gasrohres 18 hintereinander angeordnete Abschnitte umfassen.

Die zur Fixierung des Gasrohres 18 dienenden Klemmeinrichtungen 32 der erfindungsgemäßen Faltvorrichtung sind ebenso wie die jeweils zwischen zwei Klemmeinrichtungen 32 angeordneten Platten 27, 28 gegeneinander verstellbar, so daß die Faltvorrichtung in Verbindung mit beliebig gekrümmten Gasrohren 18 eingesetzt werden kann. Durch die Erfindung lassen sich somit beliebig gekrümmte langgestreckte Packungsformen der zusammengefalteten Luftsackhülle 12 erzielen.

### Bezugszeichenliste

- 12: Luftsackhülle
- 14: Falttasche
- 14a, 14b: Seitenwände
- 14c: Boden
- 16: Faltvolumen
- 18: Trägerorgan, Gasrohr
- 18a: Gasaustrittsöffnung
- 22: Faltraum
- 24: Betätigungseinrichtung
- 24a, 24b: Klemmbacken
- 26: Aufreißbereich, Aufreißnaht
- 27: Begrenzungsorgan, Platte
- 28: Begrenzungsorgan, Platte
- 32: Fixiereinrichtung, Klemmeinrichtung
- 34: Abschnitt
- 36: Halteelement, Haltestift
- 38: Gasgenerator
- 42: Verbindungsstelle

- Z: Ziehrichtung, Faltrichtung

## Patentansprüche

1. Verfahren zum Zusammenfalten einer aufblasbaren Luftsackhülle (12) eines Luftsackmoduls für Kraftfahrzeuge, bei dem
- die zumindest teilweise ausgebreitete Luftsackhülle (12) in wenigstens einer Falttasche (14) angeordnet wird, wobei zur Bildung eines Faltraumes (22) für die Falttasche (14) wenigstens ein Paar von vorzugsweise plattenförmigen Begrenzungsorganen (27, 28) mit etwa parallel verlaufenden Begrenzungsflächen vorgesehen ist, und
- ein die Luftsackhülle (12) enthaltendes Faltvolumen (16) der Falttasche (14) verkleinert wird, wobei die Volumenverkleinerung durch Bewegen der Falttasche (14), insbesondere durch Ziehen an der Falttasche (14), in einer etwa parallel zur Ebene der Ausbreitung der Luftsackhülle (12) verlaufenden Richtung (Z) erfolgt.

2. Verfahren nach Anspruch 1,
**dadurch gekennzeichnet,**
**daß** die Luftsackhülle (12) zu einer langgestreckten Packungsform zusammengefaltet wird.

3. Verfahren nach Anspruch 1 oder 2,
**dadurch gekennzeichnet,**
**daß** zur Bildung der Falttasche wenigstens eine Materiallage (14) um die Luftsackhülle (12) herumgelegt wird.

4. Verfahren nach einem der vorhergehenden Ansprüche,
**dadurch gekennzeichnet,**
**daß** das Faltvolumen (16) zumindest im wesentlichen ohne Faltung der Falttasche (14) verkleinert wird.

5. Verfahren nach einem der vorhergehenden Ansprüche,
**dadurch gekennzeichnet,**
**daß** die Luftsackhülle (12) an einem Bereich fixiert und mittels der Falttasche (14) in Richtung des fixierten Bereiches bewegt, insbesondere gezogen, wird.

6. Verfahren nach einem der vorhergehenden Ansprüche,
**dadurch gekennzeichnet,**
**daß** die Luftsackhülle (12) zwischen der Falttasche (14) und einem insbesondere fixierten Trägerorgan (18) des Luftsackmoduls, mit dem die Luftsackhülle (12) verbunden ist, zusammengedrückt wird, wobei bevorzugt das Trägerorgan von einem zumindest bereichsweise innerhalb der Luftsackhülle (12) verlaufenden Gasrohr (18) gebildet wird.

7. Verfahren nach einem der vorhergehenden Ansprüche,
**dadurch gekennzeichnet,**
**daß** eine Seitenwand (14a) der Falttasche (14) fixiert und das Faltvolumen (16) durch Ziehen an einer anderen Seitenwand (14b) der Falttasche (14) verkleinert wird.

8. Verfahren nach einem der vorhergehenden Ansprüche,
**dadurch gekennzeichnet,**
**daß** die Verkleinerung des Faltvolumens (16) innerhalb eines Faltraumes (22) erfolgt, durch den die Packungsgröße der Luftsackhülle (12) beim Zusammenfalten in von einer Faltrichtung (Z) abweichenden Richtungen, insbesondere etwa senkrecht zur Faltrichtung (Z), begrenzt wird.

9. Verfahren nach einem der vorhergehenden Ansprüche,
**dadurch gekennzeichnet,**
**daß** die Verkleinerung des Faltvolumens (16) zwischen zwei zumindest im wesentlichen parallel verlaufenden, insbesondere an plattenförmigen Begrenzungsorganen (27, 28) ausgebildeten Begrenzungsflächen erfolgt.

10. Verfahren nach einem der vorhergehenden Ansprüche,
**dadurch gekennzeichnet,**
**daß** nach dem Zusammenfalten der Luftsackhülle (12) auf die endgültige Packungsgröße die Falttasche (14) verschlossen wird, insbesondere durch Verbinden, bevorzugt Verschweißen und/oder Vernähen, von gegenüberliegenden Seitenwänden (14a, 14b) der Falttasche (14).

11. Verfahren zur Herstellung eines Luftsackmoduls für Kraftfahrzeuge, bei dem die Luftsackhülle (12) des Luftsackmoduls durch ein Verfahren nach einem der vorhergehenden Ansprüche zusammengefaltet wird.

12. Vorrichtung zum Zusammenfalten einer aufblasbaren Luftsackhülle (12) eines Luftsackmoduls für Kraftfahrzeuge, insbesondere zur Durchführung des Verfahrens nach einem der vorhergehenden Ansprüche, mit wenigstens einer Falttasche (14) zur Aufnahme der zumindest teilweise ausgebreiteten Luftsackhülle (12) und einer Betätigungseinrichtung (24), mit der ein die Luftsackhülle (12) enthaltende Faltvolumen (16) der Falttasche (14) verkleinerbar ist,
**dadurch gekennzeichnet,**
**daß** zur Bildung eines Faltraumes (22) für die Falttasche (14) wenigstens ein Paar von vorzugsweise plattenförmigen Begrenzungsorganen (27, 28) mit etwa parallel verlaufenden Begrenzungsflächen vorgesehen ist.

13. Vorrichtung nach Anspruch 13,
**dadurch gekennzeichnet,**
**daß** die Falttasche (14) ein als Abdeckung für zumindest die zusammengefaltete Luftsackhülle (12) dienender Bestandteil des Luftsackmoduls ist.

14. Vorrichtung nach Anspruch 12 oder 13,
**dadurch gekennzeichnet,**
**daß** die Falttasche (14) aus einem flexiblen Material hergestellt ist, insbesondere aus Textil- und/oder Gewebematerial.

15. Vorrichtung nach einem der Ansprüche 12 bis 14,
**dadurch gekennzeichnet,**
**daß** die Falttasche (14) mit wenigstens einem bevorzugt linien- oder streifenförmigen Aufreißbereich (26) versehen ist.

16. Vorrichtung nach einem der Ansprüche 12 bis 15,
**dadurch gekennzeichnet,**
**daß** die insbesondere durch den Abstand etwa paralleler Begrenzungsflächen bestimmte Höhe des Faltraumes (22) zumindest näherungsweise den Außenabmessungen eines zumindest bereichsweise innerhalb der Luftsackhülle (12) verlaufenden Trägerorgans (18), insbesondere eines Gasrohres, entspricht.

17. Vorrichtung nach einem der Ansprüche 12 bis 16,
**dadurch gekennzeichnet,**
**daß** die Begrenzungsorgane (27, 28) zum Öffnen und Schließen des Faltraumes (22) relativ zueinander bewegbar, insbesondere verschwenkbar, sind.

18. Vorrichtung nach einem der Ansprüche 12 bis 17,
**dadurch gekennzeichnet,**
**daß** eine Fixiereinrichtung (36) für die Falttasche (14), insbesondere für eine Seitenwand (14a) der Falttasche (14), vorgesehen ist, die bevorzugt mehrere mit Abstand voneinander angeordnete, vorzugsweise stiftförmige Halteelemente (36) umfaßt.

19. Vorrichtung nach einem der Ansprüche 12 bis 18,
**dadurch gekennzeichnet,**
**daß** eine Fixiereinrichtung (32), insbesondere eine Klemmeinrichtung, für die Luftsackhülle (12) vorgesehen ist, die bevorzugt außerhalb eines Faltraumes (22) für die Falttasche (14) angeordnet ist.

20. Vorrichtung nach Anspruch 19,
**dadurch gekennzeichnet,**
**daß** die Fixiereinrichtung (32) zur Fixierung eines Trägerorgans (18) des Luftsackmoduls ausgebildet ist, wobei bevorzugt das Trägerorgan von einem zumindest bereichsweise innerhalb der Luftsackhülle (12) verlaufenden Gasrohr (18) gebildet ist.

21. Vorrichtung nach einem der Ansprüche 12 bis 20,
**dadurch gekennzeichnet,**
**daß** die Betätigungseinrichtung (24) zur Verkleinerung des Faltvolumens (16) der Falttasche (14) etwa parallel zur Ebene der Ausbreitung der Luftsackhülle (12) bewegbar ist.

22. Vorrichtung nach einem der Ansprüche 12 bis 21,
**dadurch gekennzeichnet,**
**daß** sie insbesondere zur Bildung gekrümmter langgestreckter Pakkungsformen der zusammengefalteten Luftsackhülle (12) in mehrere Abschnitte (34) unterteilt ist, die bevorzugt relativ zueinander verstellbar sind.

23. Vorrichtung nach einem der Ansprüche 12 bis 22,
**dadurch gekennzeichnet,**
**daß** wenigstens eine Fixiereinrichtung (32) für die Luftsackhülle (12) zur Bildung unterschiedlicher Packungsformen, insbesondere zur Bildung unterschiedlich gekrümmter langgestreckter Packungsformen, der zusammengefalteten Luftsackhülle (12) verstellbar ist.

## Claims

1. Method for folding together an inflatable airbag envelope (12) of an airbag module for motor vehicles, in which
- the at least partly spread out airbag envelope (12) is arranged in at least one folding pocket (14), with at least one pair of preferably plate-shaped boundary members (27, 28), with boundary surfaces which preferably extend approximately in parallel, being provided for forming a folding space (22) for the folding pocket (14); and
- a folding volume (16) of the folding pocket (14) which contains the airbag envelope (12) is reduced in size, with the volume reduction taking place through moving the folding pocket (14), in particular through drawing at the folding pocket (14), in a direction (Z) which extends approximately parallel to the plane of the spreading out of the airbag envelope (12).

2. Method in accordance with claim 1, **characterized in that** the airbag envelope (12) is folded together to form an elongate packing shape.

3. Method in accordance with claim 1 or claim 2, **characterized in that** at least one material layer (14) is laid around the airbag envelope (12) for forming the folding pocket.

4. Method in accordance with any one of the preceding claims, **characterized in that** the folding volume (16) is reduced in size at least substantially without folding the folding pocket (14).

5. Method in accordance with any one of the preceding claims, **characterized in that** the airbag envelope (12) is fixed at a region and is moved, in particular drawn, by means of the folding pocket (14) in the direction of the fixed region.

6. Method in accordance with any one of the preceding claims, **characterized in that** the airbag envelope (12) is pressed together between the folding pocket (14) and an in particular fixed support member (18) of the airbag module to which the airbag envelope (12) is connected, with the support member preferably being formed by a gas tube (18) which extends at least region-wise within the airbag envelope (12).

7. Method in accordance with any one of the preceding claims, **characterized in that** one side wall (14a) of the folding pocket (14) is fixed and the folding volume (16) is reduced in size through drawing at another side wall (14b) of the folding pocket (14).

8. Method in accordance with any one of the preceding claims, **characterized in that** the reduction of the folding volume (16) takes place within a folding space (22) through which the packing size of the airbag envelope (12) is limited during the folding together in directions which deviate from a folding direction (Z), in particular approximately perpendicular to the folding direction (Z).

9. Method in accordance with any one of the preceding claims, **characterized in that** the reduction of the folding volume (16) takes place between two boundary surfaces which extend at least substantially parallel and which are in particular formed at plate-shaped boundary members (27, 28).

10. Method in accordance with any one of the preceding claims, **characterized in that** the folding pocket (14) is closed after the folding together of the airbag envelope (12) to the final packing size, in particular through connecting, preferably welding and/or sewing, of oppositely lying side walls (14a, 14b) of the folding pocket (14).

11. Method for the manufacture of an airbag module for motor vehicles, in which the airbag envelope (12) of the airbag module is folded together using a method in accordance with any one of the preceding claims.

12. Apparatus for folding together an inflatable airbag envelope (12) of an airbag module for motor vehicles, in particular for carrying out the method in accordance with any one of the preceding claims, comprising at least one folding pocket (14) for the reception of the at least partly spread out airbag envelope (12) and an actuation device (24) by means of which a folding volume (16) of the folding pocket (14) which contains the airbag envelope (12) can be reduced in size, **characterized in that** at least one pair of preferably plate-shaped boundary members (27, 28), with boundary surfaces which extend approximately in parallel, is provided for forming a folding space (22) for the folding pocket (14).

13. Apparatus in accordance with claim 12, **characterized in that** the folding pocket (14) is a constituent of the airbag module which serves as a cover for at least the folded together airbag envelope (12).

14. Apparatus in accordance with claim 12 or claim 13, **characterized in that** the folding pocket (14) is manufactured of a flexible material, in particular of textile and/or fabric material.

15. Apparatus in accordance with any one of the claims 12 to 14, **characterized in that** the folding pocket (14) is provided with at least one preferably line-shaped or strip-shaped tear-open region (26).

16. Apparatus in accordance with any one of the claims 12 to 15, **characterized in that** the height of the folding space (22) which is determined in particular by the spacing of approximately parallel boundary surfaces corresponds at least approximately to the outer dimensions of a support member (18), in particular of a gas tube, which extends at least region-wise within the airbag envelope (12).

17. Apparatus in accordance with any one of the claims 12 to 16, **characterized in that** the boundary members (27, 28) are movable, in particular pivotal, relative to one another for opening and closing the folding space (22).

18. Apparatus in accordance with any one of the claims 12 to 17, **characterized in that** a fixing device (36) is provided for the folding pocket (14), in particular for a side wall (14a) of the folding pocket (14), which preferably comprises a plurality of preferably pin-shaped holding elements (36) which are arranged with a spacing from one another.

19. Apparatus in accordance with any one of the claims 12 to 18, **characterized in that** a fixing device (32), in particular a clamping device, is provided for the airbag envelope (12) and is preferably arranged outside a folding space (22) for the folding pocket (14).

20. Apparatus in accordance with claim 19, **characterized in that** the fixing device (32) is formed for fixing a support member (18) of the airbag module, with the support member preferably being formed by a gas tube (18) which extends at least region-wise within the airbag envelope (12).

21. Apparatus in accordance with any one of the claims 12 to 20, **characterized in that** the actuation device (24) can be moved approximately parallel to the plane of the spreading out of the airbag envelope (12) for the reduction of the folding volume (16) of the folding pocket (14).

22. Apparatus in accordance with any one of the claims 12 to 21, **characterized in that** it is subdivided into a plurality of sections (34) in particular for forming curved elongate packing shapes of the folded together airbag envelope (12), with the sections (34) preferably being displaceable relative to one another

23. Apparatus in accordance with any one of the claims 12 to 22, **characterized in that** at least one fixing device (32) for the airbag envelope (12) can be displaced for forming different packing shapes, in particular for forming differently curved elongate packing shapes, of the folded together airbag envelope (12).

## Revendications

1. Procédé de pliage d'une enveloppe gonflable (12) d'un sac gonflable de sécurité d'un module de sac gonflable de sécurité pour véhicules automobiles, dans lequel
- l'enveloppe (12) au moins partiellement étalée du sac gonflable de sécurité est disposée dans au moins une poche de pliage (14), au moins une paire d'organes limiteurs (27, 28) de préférence configurés en forme de plaques, présentant des surfaces de limitation s'étendant parallèlement l'une à l'autre, étant prévue pour former un espace de pliage (22) pour la poche de pliage (14), et
- un volume de pliage (16) de la poche de pliage (14), qui contient l'enveloppe (12) du sac gonflable de sécurité, étant rétréci, le rétrécissement du volume étant produit par un déplacement de la poche de pliage (14), en particulier par une traction exercée sur la poche de pliage (14), dans une direction (Z) s'étendant à peu près parallèlement au plan d'extension de l'enveloppe (12) du sac gonflable de sécurité.

2. Procédé selon la revendication 1, **caractérisé en ce que** l'enveloppe (12) du sac gonflable de sécurité est repliée en une forme de paquet allongée.

3. Procédé selon la revendication 1 ou 2, **caractérisé en ce que**, pour former la poche de pliage, au moins une couche de matière (14) est placée autour de l'enveloppe (12) du sac gonflable de sécurité.

4. Procédé selon l'une des revendications précédentes, **caractérisé en ce que** l'essentiel au moins du rétrécissement du volume de pliage (16) est effectué sans pliage de la poche de pliage (14).

5. Procédé selon l'une quelconque des revendications précédentes, **caractérisé en ce que** l'enveloppe (12) du sac gonflable de sécurité est fixée au niveau d'une partie de celle-ci, et qu'elle est déplacée, et notamment tirée, en direction de la partie fixée, par l'intermédiaire de la poche de pliage (14).

6. Procédé selon l'une quelconque des revendications précédentes, **caractérisé en ce que** l'enveloppe (12) du sac gonflable de sécurité est comprimée entre la poche de pliage (14) et un organe de support (18), notamment fixe, du module de sac gonflable de sécurité, auquel est reliée l'enveloppe (12) du sac gonflable de sécurité, l'organe de support étant de préférence constitué par un tube à gaz (18) s'étendant au moins par endroits à l'intérieur de l'enveloppe (12) du sac gonflable de sécurité.

7. Procédé selon l'une quelconque des revendications précédentes, **caractérisé en ce qu'**une paroi latérale (14a) de la poche de pliage (14) est fixée, et que le volume de pliage (16) est rétréci par une traction exercée sur une autre paroi latérale (14b) de la poche de pliage (14).

8. Procédé selon l'une quelconque des revendications précédentes, **caractérisé en ce que** le rétrécissement du volume de pliage (16) s'effectue à l'intérieur d'un espace de pliage (22) qui limite la taille du paquet de l'enveloppe (12) du sac gonflable de sécurité lors du pliage, dans des directions différentes de la direction de pliage (Z), notamment à peu près perpendiculairement à la direction de pliage (Z).

9. Procédé selon l'une quelconque des revendications précédentes, **caractérisé en ce que** le rétrécissement du volume de pliage (16) s'effectue entre deux surfaces de limitation s'étendant essentiellement parallèlement l'une à l'autre, définies par deux organes limiteurs (27, 28) notamment réalisés en forme de plaques.

10. Procédé selon l'une quelconque des revendications précédentes, **caractérisé en ce qu'**après le pliage de l'enveloppe (12) du sac gonflable de sécurité à la taille définitive du paquet, la poche de pliage (14) est fermée, en particulier en reliant, de préférence par soudage et/ou par couture, les parois latérales opposées (14a, 14b) de la poche de pliage (14) l'une à l'autre.

11. Procédé de fabrication d'un module de sac gonflable de sécurité pour véhicules automobiles, dans lequel l'enveloppe (12) du sac gonflable de sécurité du module de sac gonflable de sécurité est pliée suivant un procédé selon l'une des revendications précédentes.

12. Dispositif de pliage d'une enveloppe gonflable (12) d'un sac gonflable de sécurité d'un module de sac gonflable de sécurité pour véhicules automobiles, permettant notamment la mise en oeuvre du procédé selon l'une des revendications précédentes, comprenant au moins une poche de pliage (14) destinée à recevoir l'enveloppe (12) du sac gonflable de sécurité au moins partiellement étalée, et un dispositif d'actionnement (24) à l'aide duquel un volume de pliage (16) de la poche de pliage (14), qui contient l'enveloppe (12) du sac gonflable de sécurité, peut être rétréci,
**caractérisé en ce que**, pour former un espace de pliage (22) pour la poche de pliage (14), au moins une paire d'organes limiteurs (27, 28) de préférence réalisés sous forme de plaques est prévue, organes qui présentent des surfaces de limitation s'étendant de manière à peu près parallèle.

13. Dispositif selon la revendication 12, **caractérisé en ce que** la poche de pliage (14) est un composant du module de sac gonflable de sécurité, qui sert de couverture au moins pour l'enveloppe pliée (12) du sac gonflable de sécurité.

14. Dispositif selon la revendication 12 ou 13, **caractérisé en ce que** la poche de pliage (14) est fabriquée à partir d'un matériau flexible, en particulier à partir d'un matériau textile et/ou d'un tissu.

15. Dispositif selon l'une des revendications 12 à 14, **caractérisé en ce que** la poche de pliage (14) est pourvue d'au moins une zone de rupture (26) de préférence configurée en forme de ligne ou de bande.

16. Dispositif selon l'une des revendications 12 à 15, **caractérisé en ce que** la hauteur de l'espace de pliage (22), qui est notamment définie par l'écartement entre des surfaces de limitation à peu près parallèles, correspond au moins approximativement aux dimensions extérieures d'un organe de support (18) s'étendant en partie au moins à l'intérieur de l'enveloppe (12) du sac gonflable de sécurité, notamment celles d'un tube à gaz.

17. Dispositif selon l'une des revendications 12 à 16, **caractérisé en ce que** les organes limiteurs (27, 28) peuvent être déplacés l'un par rapport à l'autre, notamment en pivotant, de manière à effectuer l'ouverture et la fermeture de l'espace de pliage (22).

18. Dispositif selon l'une des revendications 12 à 17, **caractérisé en ce qu'**un dispositif de fixation (36) pour la poche de pliage (14) est prévu, notamment pour une paroi latérale (14a) de la poche de pliage (14), ce dispositif comprenant de préférence plusieurs éléments de maintien (36) espacés les uns des autres, de préférence réalisés sous forme de picots.

19. Dispositif selon l'une des revendications 12 à 18, **caractérisé en ce qu'**un dispositif de fixation (32), en particulier un dispositif de serrage, est prévu pour l'enveloppe (12) du sac gonflable de sécurité, ce dispositif étant de préférence disposé à l'extérieur de l'espace de pliage (22) prévu pour la poche de pliage (14).

20. Dispositif selon la revendication 19, **caractérisé en ce que** le dispositif de fixation (32) est configuré de manière à immobiliser un organe de support (18) du module de sac gonflable de sécurité, l'organe de support étant de préférence constitué par un tube à gaz (18) s'étendant au moins en partie à l'intérieur de l'enveloppe (12) du sac gonflable de sécurité.

21. Dispositif selon l'une des revendications 12 à 20, **caractérisé en ce que**, pour rétrécir le volume de pliage (16) de la poche de pliage (14), le dispositif d'actionnement (24) peut être déplacé à peu près parallèlement au plan de l'extension de l'enveloppe (12) du sac gonflable de sécurité.

22. Dispositif selon l'une des revendications 12 à 21, **caractérisé en ce que**, pour produire notamment des formes allongées courbes des paquets de l'enveloppe pliée (12) du sac gonflable de sécurité, ce dispositif est divisé en plusieurs sections (34) qui sont de préférence réglables les unes par rapport aux autres.

23. Dispositif selon l'une des revendications 12 à 22, **caractérisé en ce qu'**au moins un dispositif de fixation (32) de l'enveloppe (12) du sac gonflable de sécurité est réglable en vue de la réalisation de différentes formes de paquets, en particulier en vue de la réalisation de formes de paquets allongées de l'enveloppe pliée (12) du sac gonflable de sécurité, qui présentent différentes courbures.
